Europäisches Patentamt

European Patent Office

Office européen des brevets

(11) Numéro de publication: **0 072 602**

**A2**

## (12) DEMANDE DE BREVET EUROPEEN

(21) Numéro de dépôt: **82201182.1**

(22) Date de dépôt: **13.06.80**

(51) Int. Cl.³: **B 60 T 13/24**

(30) Priorité: **15.06.79 FR 7915413**

(43) Date de publication de la demande:
**23.02.83 Bulletin 83/8**

(84) Etats contractants désignés:
**BE DE FR GB IT NL SE**

(60) Numéro de publication de la demande initiale
en application de l'article 76 CBE: **0 021 969**

(71) Demandeur: **SOCIETE ANONYME D.B.A.**
**Centre Paris Pleyel**
**F-93521 St Denis Cédex 01(FR)**

(72) Inventeur: **Carré, Jean-Jacques**
**59 Blvd de l'Est**
**F-93340 Le Raincy(FR)**

(72) Inventeur: **Meyer, Yves**
**3 allée du Pré Fleuri**
**F-95150 Taverny(FR)**

(74) Mandataire: **Le Moenner, Gabriel et al,**
**SERVICE BREVETS BENDIX 44, Rue François 1er**
**F-75008 Paris(FR)**

(54) Servomoteur d'assistance au freinage.

(57) Le servomoteur (10), du type à dépression, comprend un boîtier (10) composé de deux coquilles (12, 14) comportant chacune une virole périphérique (v) et une paroi d'extrémité (66, 68) reliées par un voile de liaison à profil évolutif venu de matière avec la paroi d'extrémité, un élément en forme d'anneau (70, 72), solidaire de vis de fixation (60, 62) du servomoteur à un maître-cylindre ou à une cloison fixe d'un véhicule, étant disposé contre la face intérieure de la paroi d'extrémité et présentant un bord externe (74, 76) conformé pour coopérer avec la zone adjacente de plus petites dimensions radiales du voile de raccordement et renforcer ainsi la zone de raccordement entre ce dernier et la paroi d'extrémité.

FIG_1

EP 0 072 602 A2

## SERVOMOTEUR D'ASSISTANCE AU FREINAGE

La présente invention a pour objet un perfectionnement aux servomoteurs d'assistance au freinage du type à dépression.

On connaît des servomoteurs du type à dépression comportant un boîtier dans lequel se déplace un piston-moteur séparant une chambre basse pression communiquant en permanence avec une source de vide, d'une chambre haute pression généralement reliée à l'atmosphère, le piston moteur étant susceptible de se déplacer à partir d'une position de repos en réponse à l'établissement d'une différence de pression entre les deux chambres, ladite différence de pression étant commandée par une valve associée à un organe de commande d'entrée.

Dans les servomoteurs du type à dépression existants, l'importance des efforts exercés sur le boîtier est telle que, pour la réalisation de ce dernier, il est nécessaire d'employer des tôles de forte épaisseur d'où il résulte un poids élevé du servomoteur.

L'invention a pour but de proposer un agencement permettant de réduire le poids de tels servomoteurs tout en leur conservant une bonne résistance mécanique.

A cet effet, l'invention propose un servomoteur d'assistance au freinage,destiné à être disposé entre une cloison fixe d'un véhicule et un maître-cylindre,   comportant un boîtier dans lequel se déplace un ensemble formant piston-moteur divisant le boîtier en une chambre connectable à une source de vide et une chambre susceptible d'être reliée à l'atmosphère ou au vide par une valve contrôlant les déplacements du piston-moteur qui est associable directement au maître-cylindre et, par l'intermédiaire de moyens de réaction, à une tige de poussée commandée par la pédale de frein, le boîtier étant constitué de deux coquilles comportant chacune à sa périphérie une virole par laquelle elle est reliée à l'autre de façon étanche,et également chacune une paroi d'extrémité centrale annulaire transversale, coaxiale à ladite virole,et comportant des moyens de liaison avec le maître-cylindre pour l'une des coquilles et avec la cloison fixe pour l'autre, au moins une desdites viroles étant reliée au bord extrême de la paroi annulaire correspondante par un voile mince de liaison à profil évolutif venu de matière avec la paroi d'extrémité annulaire, contre laquelle est disposé intérieurement un élément en forme
d'anneau ayant sensiblement les mêmes dimensions que la paroi d'extrémité
annulaire, caractérisé en ce que l'élément en forme d'anneau comporte un
bord externe conformé pour coopérer avec la zone adjacente de plus petites
dimensions radiales du voile de liaison.

L'invention sera mieux comprise à la lecture de la description qui
va suivre et qui se réfère aux dessins annexés dans lequels :

- la figure 1 est une vue en coupe longitudinale d'un servomoteur
selon un mode de réalisation préféré de l'invention ; et

- la figure 2 montre schématiquement les efforts appliqués au
boîtier d'un servomoteur en cas de défaillance de l'assistance au freinage.

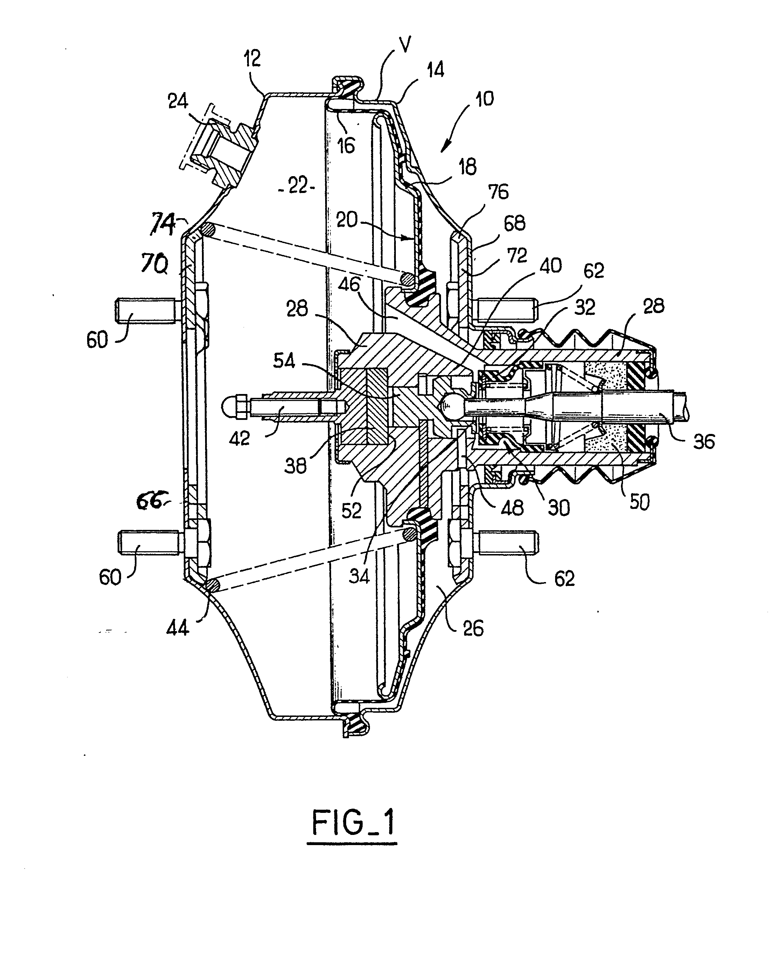

Le servomoteur d'assistance illustré à la figure 1 est du type
pneumatique à dépression.  Il comporte un boîtier 10 formé de deux coquilles
12 et 14 solidaires à leur périphérie et emprisonnant la partie périphérique d'une membrane souple 16 formant avec un plateau rigide 18 un ensemble
piston moteur 20.  Le piston moteur 20 sépare le boîtier en deux chambres,
une chambre basse pression 22 communiquant en permanence avec une source à
vide par l'intermédiaire d'un clapet anti-retour 24 et une chambre haute
pression 26.  Le plateau 18 comporte un noyau 28 qui fait saillie à l'extérieur du boîtier.  Dans ce noyau 28 est disposé un dispositif de valve
de commande 30 du type à trois voies.  La valve de commande 30 comporte
d'une part un clapet annulaire 32 susceptible de venir alternativement en
appui sur un siège mobile 34 solidaire d'un organe de commande d'entrée 36
et associé à un dispositif de réaction 38 composé d'une rondelle de caoutchouc, et d'autre part un siège 40, fixe par rapport au piston moteur.
Une des faces du disque de réaction 38 est en contact avec une extrémité
d'une tige de poussée 42 qui est susceptible de mettre en oeuvre une commande extérieure (non représentée) telle que par exemple, un maître-cylindre
de freinage de véhicule automobile.  Un ressort 44 prenant appui sur le
boîtier sollicite le piston-moteur 20 dans sa position de repos en appui
sur la coquille 14.  Lorsque le servomoteur est dans sa position de repos
telle que représentée, le clapet 32 est dégagé du siège 40 de façon à
permettre aux deux chambres 22 et 26 de communquier par l'intermédiaire
de passages tels que 46 et 48 à travers le noyau 28.  Par contre, le clapet
32 étant en appui étanche avec le siège 34, la communication entre l'atmosphère et la chambre haute pression 26 est interrompue.

Le servomoteur à dépression, tel qu'il vient d'être décrit est
d'un type classique et fonctionne comme suit :

Lorsque le conducteur du véhicule sollicite la pédale de frein, la tige 36 est déplacée vers la gauche de la figure 1 de façon à permettre au clapet annulaire 32 de prendre appui sur le siège 40 et d'interrompre la communication entre les chambres de basse pression 22 et de haute pression 26 et de dégager le clapet 32 du siège 34 pour permettre ainsi à l'air atmosphérique de traverser un filtre 50, la partie centrale du clapet 32 et de pénétrer dans la chambre haute pression 26 par le passage 48. Il en résulte la création d'une différence de pression entre les deux chambres qui entraîne un mouvement du piston-moteur 20 vers la gauche de la figure 1 et qui, compte tenu de la présence de l'épaulement 52 dans le noyau 28, permet de déplacer la tige de sortie 42 également vers la gauche de la figure 1. La réaction est transmise de la tige de sortie 42 à la tige d'entrée par l'intermédiaire du disque 38 agissant sur un prolongement 54 solidaire du clapet 34. On remarquera que le dispositif de valve 30 est du type suiveur, c'est-à-dire que les déplacements des divers organes mobiles de la valve de contrôle se font par rapport au piston-moteur 20.

En cas de défaillance du servo-moteur, due par exemple à une absence de dépression, le conducteur du véhicule peut continuer à commander le maître-cylindre au prix d'un effort très grand exercé sur la pédale. Il enfonce l'organe de poussée 36, que sollicite le prolongement 54 contre la rondelle de réaction 38, laquelle transmet l'effort à la tige de poussée 42 qui coopère avec le maître-cylindre (non représenté).

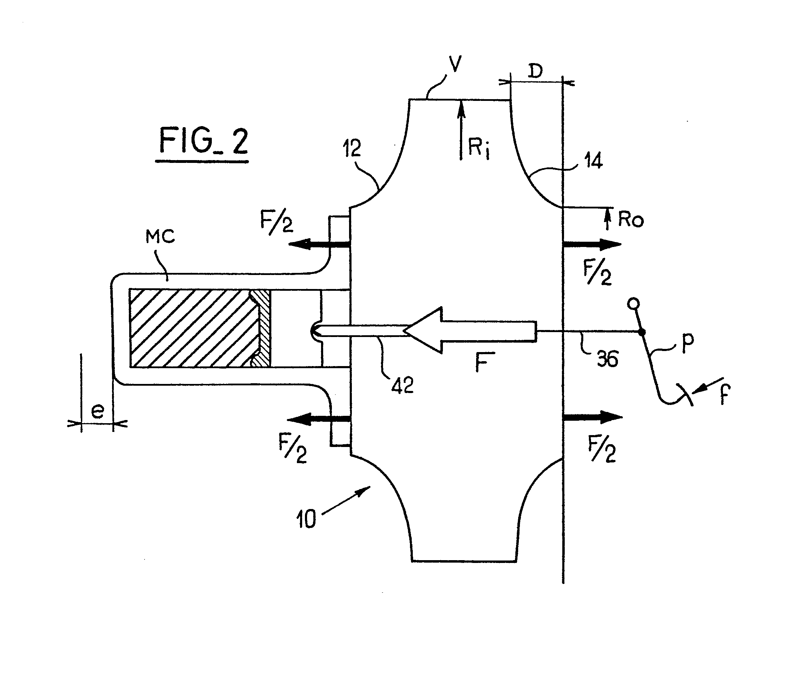

On a montré sur le schéma de la figure 2 les diverses forces auxquelles est soumis le boîtier du servomoteur lors de l'actionnement (non assisté) des freins du véhicule dans de telles conditions.

Pour un effort "f" exercé sur la pédale "p", l'organe d'entrée 36 transmet à la tige de poussée une force "F" égale à l'effort "f" multiplié par le rapport de pédale.

La force "F" a tendance à écarter le maître-cylindre "MC" de la coquille 12, elle exerce une traction "F/2" sur chacune des deux vis de fixation 60. On a montré également sur la figure 2, les forces de réaction (F/2) appliquées à la cloison "P" du véhicule sur lequel est monté l'ensemble servo-moteur/maître-cylindre par les deux vis de fixation 62.

Le fonctionnement dans de telles conditions soumet le boîtier à des efforts très importants qui tendent à provoquer l'écartement des coquilles 12 et 14 et l'avancement du maître-cymindre "MC" d'une valeur correspondante "e" (vers la gauche sur la figure 2).

Parmi les essais auxquels sont soumis les servomoteurs du type décrit, il en existe un qui impose que la distance "e" reste inférieure à 1,5 mm pour un effort sur la pédale "p" de 200 daN auquel correspond une force "F" égale à 1000 daN. Pour satisfaire une telle condition, on a été conduit à réaliser des boîtiers d'épaisseur relativement grande et par conséquent d'un poids élevé.

L'invention se propose d'obtenir un boîtier qui soit le plus léger possible pour une déformation "e" restant les limites imposées.

Les caractéristiques du servomoteur (section du piston-moteur) contribuent à imposer le rayon "$R_i$", de la virole externe "V" de chaque coquille 12 ou 14, le rayon "$R_o$" de la paroi latérale de fixation au maître-cylindre ou à la cloison "P", de même que la distance "D" mesurée parallèlement à l'axe du servomoteur entre ladite paroi latérale et le raccordement avec la virole "V".

Une autre condition que s'est fixée la demanderesse est l'utilisation de tôle de faible épaisseur formée à la presse.

Dans un boîtier où la virole serait directement reliée au bord de la paroi latérale d'extrémité (c'est-à-dire $R_i = R_o$) la virole est soumise à des efforts de traction pure alors que la paroi latérale est surtout soumise à des efforts de cisaillement ; il en résulte la nécessite d'utiliser une tôle d'épaisseur suffisante pour réaliser la paroi latérale mais surabondante pour réaliser la virole.

Dans le cas d'un boîtier ayant sensiblement les formes géométriques générales du dessin de la figure 1, une liaison entre la paroi d'extrémité centrale 66 (ou 68) et la virole "V" - distantes axialement l'une de l'autre - par un tronc de cône nécessite normalement une tôle relativement épaisse car elle doit résister à des contraintes combinées où prédominent les contraintes au cisaillement.

Selon un aspect de l'invention, on utilise de préférence une surface de liaison dans laquelle les contraintes au cisaillement et à la traction se répartissent harmonieusement de sorte qu'en tout point du boîtier la contrainte résultante, dite "équivalente", qui est la combinaison des contraintes en ce point, soit inférieure à la contrainte de limite élastique en traction simple de la tôle.

Cette bonne répartition est obtenue pour un profil évolutif qui, pris selon un plan radial d'intersection d'une coquille, est sensiblement un segment de parabole dont la concavité est dirigée vers l'extérieur de la coquille. Un tel profil a été obtenu empiriquement par déformation permanente d'une tôle mince à faible limite élastique.

Avec ce profil "isocontrainte", il est possible de faire travailler le métal du boîtier en vérifiant la formule dite de la théorie du cisaillement maximum :

$$\sqrt{\sigma^2 + 4\tau^2} = \text{Constante}$$

$\sigma$ étant la contrainte de limite élastique en traction simple et
$\tau$ étant la contrainte de limite élastique en cisaillement pur.

Les deux coquilles 12-14 étant réalisées par emboutissage d'une tôle fine d'épaisseur constante, leur fond ou paroi annulaire d'extrémité 66-68, s'étendant dans un plan transversal distant axialement, vers l'extérieur, des parties de virole V, est soumis à des contraintes de cisaillement qui sont encaissées par des anneaux de renforcement 70-72. Comme on le voit sur la figure 1, le bord 74-76 des anneaux est rabattu pour venir coopérer avec le voile de liaison à profil "isocontrainte". Cette coopération doit être parfaite sur toute la périphérie de la paroi annulaire 66-68 et de l'anneau de renforcement si l'on veut éviter une détérioration du boîtier au niveau de la zone de raccordement entre la paroi annulaire d'extrémité et le voile de liaison. Les anneaux 70-72 sont de préférence réalisés en aluminium. Leur bord rabattu contribue de plus à leur conférer une bonne résistance mécanique. Ils sont solidaires des vis de fixation de liaison au maître-cylindre 60 ou à la cloison fixe 62 respectivement.

On notera que les parois d'extrémité annulaires 66 et 68 et les renforts 70 et 72 ne sont pas nécessairement définis par des cercles interne et externe coaxiaux à la virole "V". La configuration circulaire est avantageuse lors de l'utilisation de quatre vis de fixation 60 ou 62 mais une forme de losange, carré, rectangle ou autre profil symétrique peut être intéressante dans certaines applications. Dans ce dernier cas, le voile de raccordement sera constitué par une famille de profils paraboliques dans lesquels la loi d'isocontrainte sera respectée.

. Avec l'agencement qui vient d'être décrit, il est possible de réaliser le boîtier d'un servomoteur en tôle d'acier doux de 0,5 mm d'épaisseur alors qu'on utilisait jusqu'à présent une tôle de 1,5 mm pour obtenir une résistance comparable. La réduction du poids qui en résulte est de l'ordre de 50%.

6

## REVENDICATIONS

1. Servomoteur d'assistance au freinage du type à dépression destiné à être disposé entre une cloison fixe d'un véhicule et un maître-cylindre (MC) et comportant un boîtier (10) dans lequel se déplace un ensemble formant piston-moteur (20) divisant le boîtier en une chambre (22) connectable à une source de vide et une chambre (26) susceptible d'être reliée à l'atmosphère ou au vide par une valve (30) contrôlant les déplacements du piston-moteur qui est associable directement au maître-cylindre et, par l'intermédiaire de moyens de réaction (38), à une tige de poussée (36) commandée par la pédale de frein, le boîtier étant constitué de deux coquilles (12, 14) comportant chacune à sa périphérie une virole (V) par laquelle elle est reliée à l'autre de façon étanche et également chacune une paroi d'extrémité centrale annulaire transversale (66,68) coaxiale à ladite (60,62) virole, et comportant des moyens de liaison/avec le maître-cylindre pour. l'une des coquilles et avec la cloison fixe pour l'autre, au moins une desdites viroles étant reliée au bord extrême de la paroi annulaire correspondante par un voile mince de liaison à profil évolutif venu de matière avec la paroi d'extrémité annulaire, contre laquelle est disposé intérieurement un élément en forme d'anneau ayant sensiblement les mêmes dimensions que la paroi d'extrémité annulaire, caractérisé en ce que l'élément en forme d'anneau (70, 72) comporte un bord externe (74, 76) conformé pour coopérer avec la zone adjacente de plus petites dimensions radiales du voile de liaison.

2. Servomoteur d'assistance selon la revendication 1, caractérisé en ce que l'élément en forme d'anneau (70, 72) comporte un bord externe rabattu (74, 76).

3. Servomoteur d'assistance selon la revendication 1 ou la revendication 2, caractérisé en ce que l'élément en forme d'anneau (70, 72) est solidaire des vis de fixation (60, 62) du servomoteur au maître-cylindre (MC) ou à la cloison fixe du véhicule.

4. Servomoteur d'assistance selon l'une des revendications précédentes, caractérisé en ce que l'élément en forme d'anneau (70, 72) est réalisé en alliage léger.

5. Servomoteur d'assistance selon l'une des revendications précédentes, caractérisé en ce que le voile de liaison est également venu de matière avec la virole (V) correspondante.

6. Servomoteur d'assistance selon la revendication 5, caractérisé en ce que la coquille est formée par un emboutissage d'une feuille de métal.

7. Servomoteur d'assistance  selon l'une des revendications 1
à 6, caractérisé en ce que chaque coquille comporte un élément de renforcement en forme d'anneau (70, 72) dont le bord externe (74, 76) coopère
avec la zone adjacente du voile de liaison correspondant.

## FIG_1

FIG_ 2